# EUROPEAN PATENT SPECIFICATION

(11) **EP 4 563 846 B1**
(45) Date of publication and mention of the grant of the patent: **21.10.2026**
(21) Application number: 24202695.3
(22) Date of filing: 25.09.2024
(51) Int. Cl.: F16H 57/04

(54) **LUBRICATION SYSTEM OF A PROPULSION SYSTEM OF AN AGRICULTURAL TRACTOR**
SCHMIERSYSTEM EINES ANTRIEBSSYSTEMS EINES LANDWIRTSCHAFTLICHEN TRAKTORS
SYSTÈME DE LUBRIFICATION D'UN SYSTÈME DE PROPULSION D'UN TRACTEUR AGRICOLE

(30) Priority: 26.09.2023 IT 202300019842
(43) Date of publication of application: 04.06.2025
(73) Proprietor: CNH Industrial Italia S.p.A., 10156 Torino (IT)
(72) Inventor: Venturini, Giorgio, 10156 Turin (IT); Berselli, Alberto, 10156 Turin (IT); Borghi, Alberto, 10156 Turin (IT); Zanasi, Nicholas, 10156 Turin (IT); Terzi, Stefano, 10156 Turin (IT); Mazzali, Francesca, 10156 Turin (IT)
(74) Representative: CNH Industrial IP Department

(56) References cited:
- EP-A1- 4 202 261
- GB-A- 2 606 694
- US-B1- 6 321 867

## Description

### Field of the invention

The present invention relates to the field of lubrication systems for agricultural tractor transmissions.

### State of the art

Agricultural tractors, especially large ones, are equipped with a propulsion system that includes an internal combustion engine E, generally a diesel cycled, to which a vehicular transmission module DL is connected at the rear to drive at least one rear axle in rotation for moving the vehicle.

At the front of the engine is affixed a front module FM including a transmission to rotate a front axle as shown for example in EP4202261A1 and GB2606694A.

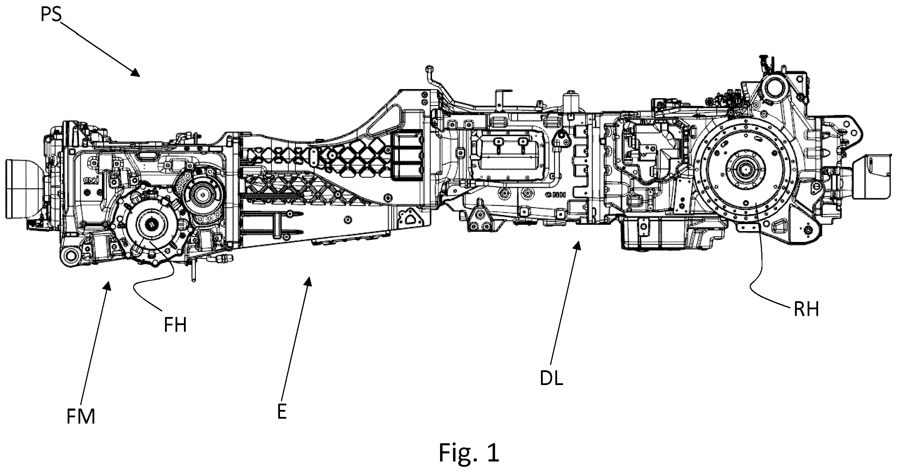

Figure 1 shows an example of a propulsion system according to the prior art of a large agricultural vehicle.

In the same figure, it is possible to recognize a front hub FH and a rear hub RH arranged to support respective wheels in rotation.

Generally, such machines are equipped with brakes only at the rear. They are rarely equipped with front brakes. Generally, the moving parts arranged in the front module are lubricated in an oil bath, but the oil is not forced to circulate and therefore is not cooled by a radiator.

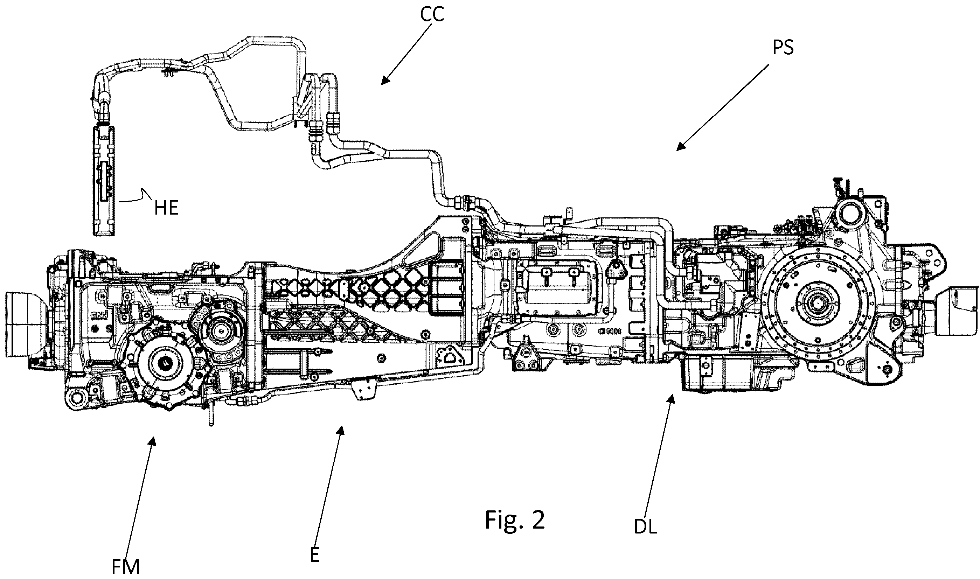

On the contrary, the rear module is equipped with a hydraulic circuit DC with a pump driven in rotation by the same transmission and with a radiator HE arranged to cool the lubricating oil circulating in this circuit, see figure 2 of the prior art.

In other words, the hydraulic oil volume of the front module is operationally separate from the hydraulic oil volume of the rear module.

However, the increase in performance of recent tractors makes concrete the need to cool the front module oil. Therefore, the hydraulic oil of the front module begins to increasingly fulfil the role of a thermal medium for cooling as well as lubricating the components.

Starting from the construction characteristics of the rear module, it would be necessary to completely redesign the front module, equipping it with a hydraulic pump and a relative radiator.

This leads to an increase in costs and an increase in components to be housed on board of the vehicle.

Unless specifically excluded in the detailed description that follows, what is described in this chapter is to be considered as an integral part of the detailed description.

### Summary of the Invention

The purpose of the present invention is to indicate a hydraulic oil cooling circuit that is easy to integrate into a front module of an agricultural vehicle.

The basic idea of the present invention is to interconnect the lubrication circuit of the rear module to the front module. In particular, the idea is to draw the oil from the lubrication circuit at the radiator and to return the drawn oil using an electric pump operationally associated with the front module.

Advantageously, the oil circuit radiator of the rear module is placed in front of the engine to maximize its efficiency and therefore it is simple to withdraw the hydraulic oil.

However, it is not as easy to guarantee the return of the hydraulic oil from the front module to the rear module and therefore the installation of the electric pump is required.

The interconnections are made using external pipes and therefore it is possible to cool the hydraulic oil of the front module without having to redesign it and, above all, without intervening on the engine which represents an interconnection element between the front module and the rear module.

The dependent claims describe preferred variants of the invention, forming an integral part of the present description.

### Brief description of the figures

Further objects and advantages of the present invention will be clear from the following detailed description of an example of its implementation (and its variants) and from the attached drawings given purely for explanatory and nonlimiting purposes, in which:
Fig. 1 discloses schematically an example of a propulsion system of an agricultural vehicle according to the prior art;
Fig. 2 shows a hydraulic oil cooling circuit of the rear module according to the prior art;
Fig. 3 discloses the propulsion scheme of Fig. 2 modified according to the present invention;
Figs. 4, 5 and 6 discloses respectively a front view, a longitudinal section and a rear view of the front module according to the present invention;
Fig. 7 shows a state diagram representative of an example of a control method of the electric pump, which is the object of the present invention.

The same reference numbers and letters in the figures identify the same elements or components or functions.

It should also be noted that the terms "first", "second", "third", "higher", "lower" and the like may be used here to distinguish various elements. These terms do not imply a spatial, sequential, or hierarchical order for the modified elements unless specifically indicated or inferred from the text.

The elements and characteristics illustrated in the different preferred embodiments, including the drawings, can be combined with each other without departing from the scope of protection of the present application as described below.

### Detailed description and exemplary embodiments

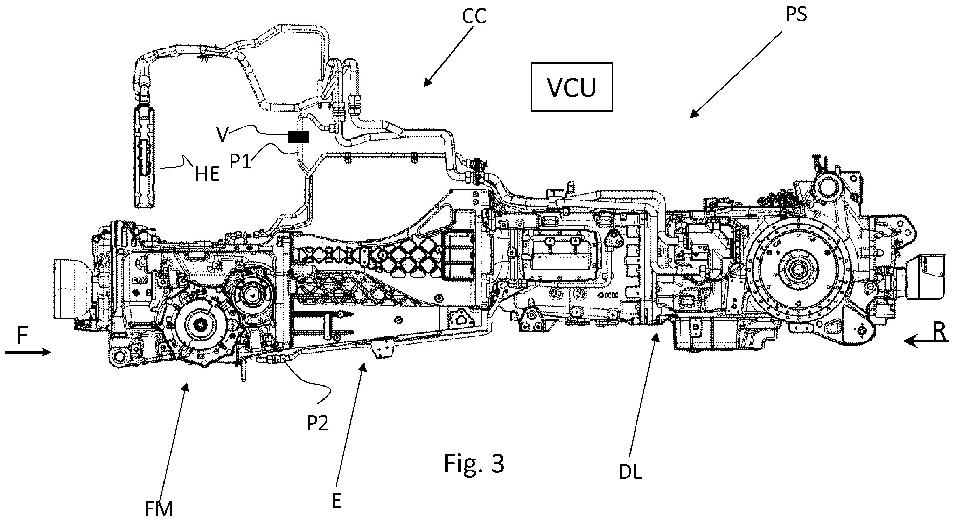

With reference to Fig. 3, the propulsion scheme of Fig. 2 is shown modified according to the present invention: two ducts P1 and P2 connect the front module with the lubrication circuit CC of the rear module, in the relating externally accessible portion, namely with the radiator HE.

In more detail, the duct P1 draws the oil immediately downstream of the radiator HE.

Instead, the duct P2 is located in a lower part of the front module and connects the electric pump P with an opening in the crankcase defining the rear module.

The transmission and rear brakes are housed in the rear module DL.

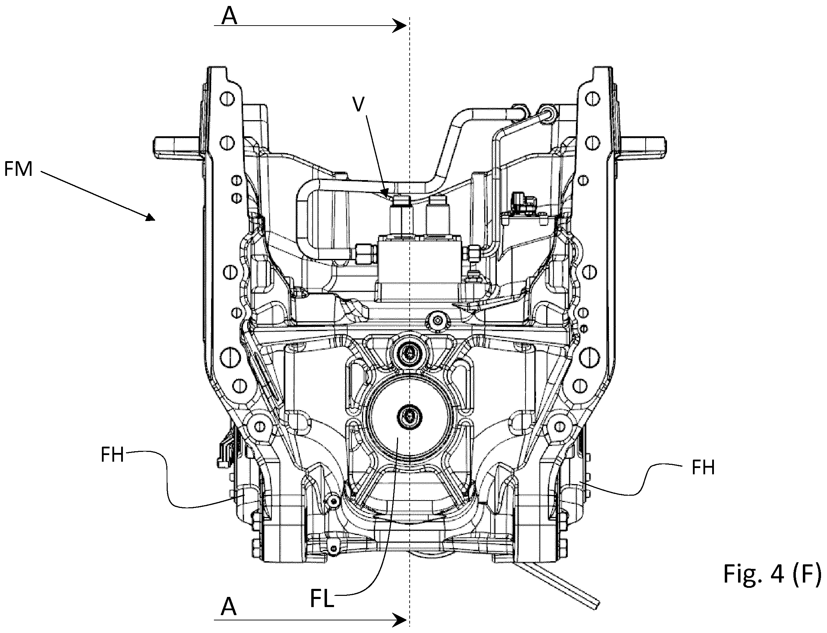

Fig. 4 shows a front view of the front module of which it is possible to recognize a front flange FL to which a device or tool that needs to be guided in rotation by the PTO can be connected.

Also in Fig. 4 it is possible to see the two hubs FH arranged to support vehicular wheels (not shown).

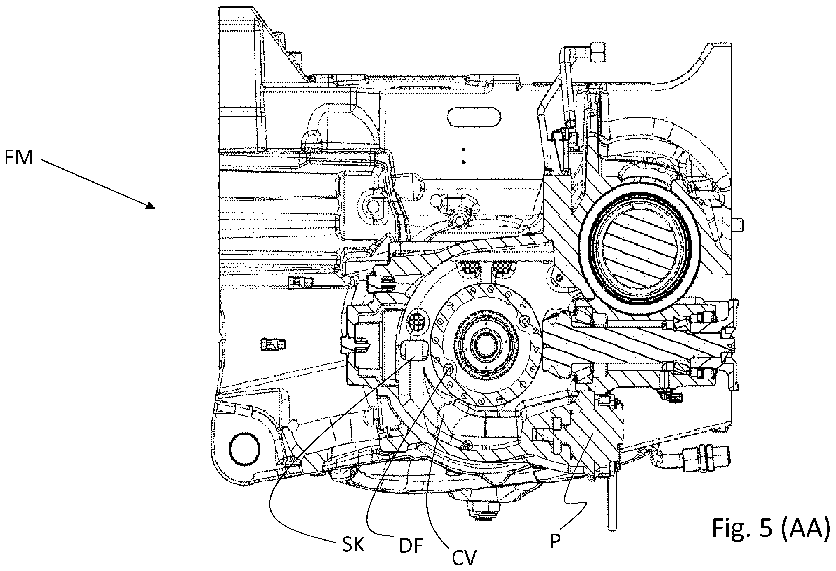

Fig. 5 represents a sectional view, according to plane AA indicated in Fig. 4.

Inside the front module it is possible to recognize a closed housing CV, which houses moving parts, such as a differential and/or oil bath brakes.

According to the present invention, an electric pump P is associated with the housing CV, via a duct having an opening SK.

The opening SK is preferably located approximately halfway up the height of the housing CV so that it is impossible to suck out all the hydraulic oil contained in the housing.

According to a preferred variant of the invention, the duct P1 is connected to the hydraulic circuit CC for cooling the hydraulic oil of the rear module by means of a solenoid valve V suitably controlled as described below. Therefore, the hydraulic oil does not circulate in the front module continuously but only when necessary.

Consequently, the electric pump P is also operated only when necessary.

According to a preferred variant of the invention, a processing unit VCU is configured and operationally connected with the valve V and the pump P to control its operation.

Preferably, the valve V is controlled to open according to a factor proportional to a pressure value measured in the hydraulic circuit for actuating the front and/or rear brakes. Evidently, a pressure sensor, not shown, is slaved to the processing unit to perform at least this task.

The processing unit is configured to calculate an oil flow rate drawn through valve V as a function of a pressure value measured in the hydraulic lubrication circuit of the rear module, using a further specific pressure sensor (not shown) and the opening of valve V. Preferably, the processing unit is also configured to take into account the temperature of the hydraulic oil to obtain a more precise estimate of the amount of oil withdrawn, as the temperature affects the viscosity of the hydraulic oil in a per se known way. For this reason, a temperature sensor (not shown) is associated with the hydraulic circuit and operationally connected to the processing unit VCU.

The processing unit VCU is further configured to activate the electric pump P to remove the same quantity of oil introduced by opening the valve V.

According to a preferred aspect of the invention, the quantity of oil removed is calculated as a function of the current absorbed by the pump. In fact, in the case of emulsified oil, the electrical absorption of the pump is reduced proportionally to the oil/air ratio that defines the emulsion, therefore, the estimate of the quantity of oil is reliable.

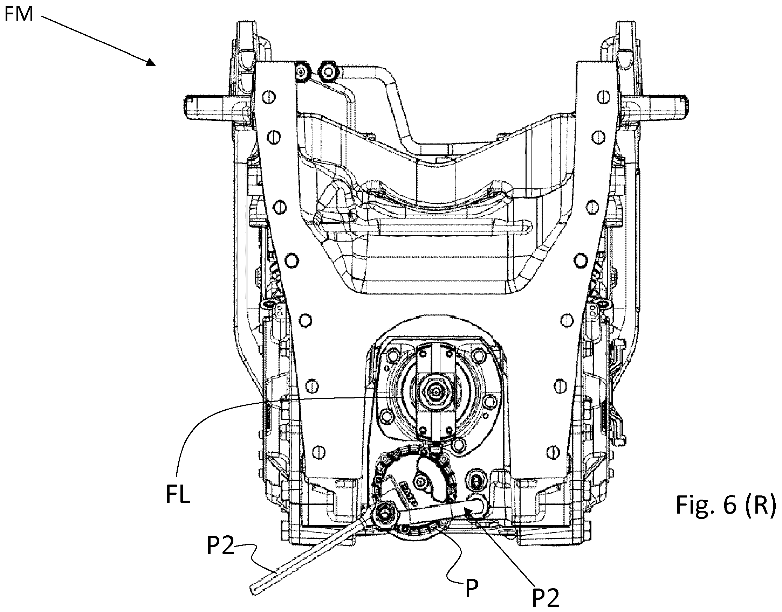

With reference to Fig. 6, a rear view of the front module FM is shown, highlighting the electric pump P and the hydraulic oil return duct P2.

According to a preferred variant of the invention, the processing unit is operationally connected with an inclinometer to know a pitch inclination of the vehicle.

This fact is relevant, since, by placing the opening SK forward, when the vehicle proceeds downhill, the hydraulic oil submerges the opening SK and therefore, despite the estimate of the quantity of oil sucked in by the pump P, there is the risk of sucking an excessive amount of oil, leaving the moving parts dry. For this reason, the operation of pump P can be inhibited or limited when the inclinometer indicates that the vehicle is proceeding downhill.

However, if the opening SK is placed backwards, the same situation can occur when the vehicle moves uphill. In this case, the operation of pump P can be inhibited or limited when the inclinometer indicates that the vehicle is proceeding uphill.

It is considered more advantageous to place the opening SK at the front, rather than at the back, for the following reasons: when the vehicle brakes downhill, which represents the most severe condition, the quantity of oil drawn from the hydraulic circuit CC is relatively high, as the pressure in the brake actuation circuit is high, in order to slow down the significant mass of the vehicle. Therefore, any emulsion, lighter than liquid oil, is not drawn by the pump, ensuring efficient oil recirculation. In fact, if the pump sucks emulsion rather than liquid oil, the recirculation efficiency would be reduced with a reduction in the cooling efficiency of the hydraulic oil.

## Claims

1. Lubrication system of a propulsion system (PS) of an agricultural tractor, the propulsion system comprising
- a combustion engine (E) equipped with a rear PTO and a front PTO,
- a rear module (DL) including a rear transmission and brakes operationally connected to the rear PTO to transmit motion to a rear axle (RH),
- a front module (FM) including at least one differential operationally connected to the front PTO to transmit motion to a front axle (FH) and front brakes,
said lubrication system is **characterized in that**
. the rear module (DL) comprising a first hydraulic oil lubrication circuit (CC) comprising
+ a hydraulic pump operationally coupled with the transmission to receive a driving force from it,
+ a radiator (HE), located in front of the engine (E),
. the front module (FM) comprising a second lubrication circuit comprising
+ a first duct (P1) connected to the first lubrication circuit (CC) downstream of the radiator,
+ an electric pump (P) and
+ a second duct (P2) connected between the electric pump (P) and the first lubrication circuit (CC) to recirculate hydraulic oil drawn through said first duct (P1).

2. The system of claim 1, further comprising processing means (VCU) configured to control a valve and said electric pump (P).

3. A system according to claim 2, wherein a second circuit further includes an electrical valve (V), and wherein said processing means is further configured to control said valve (V).

4. System according to claim 3, wherein said processing means is configured to perform at least one of the following procedures:
- controlling of the valve opening (V) proportionally to a pressure value in a hydraulic circuit implementing the rear and/or front brakes,
- calculating of a first quantity of oil drawn through the valve (V) based on
+ a valve opening time and
+ a pressure value in a first hydraulic circuit and preferably also
+ a temperature value of the tapped oil,
- Activating of the hydraulic pump (P) to recirculate the oil drawn through the valve;
- Calculating of a second quantity of oil pumped by the hydraulic pump (P) as a function of a supply current value of the hydraulic pump during a relative activation and stopping of the hydraulic pump (P) when said second quantity equals said first quantity.

5. System according to any of the previous claims, wherein the front module includes at least one compartment in which rotating members, such as a differential and/or brakes, are arranged and wherein the electric pump is associated with the front module (FM) by means of a blind cavity wherein a duct opens having a suction opening (SK) arranged in an intermediate position of a height of the compartment, in operating conditions.

6. System according to claim 5, wherein said intake opening (SK) opens into the compartment via a corresponding front or rear wall with respect to a forward direction of travel of the propulsion system (PS).

7. System according to claim 6, further comprising an inclinometer operatively interfaced with said processing means and wherein said processing means are configured to inhibit or limit an activation of the pump (P) when the vehicle advances downhill or uphill respectively.

8. System according to claim 6 or 7, wherein said suction opening (SK) is arranged at approximately half the height of the compartment.

## Patentansprüche

1. Schmiersystem eines Antriebssystems (PS) eines landwirtschaftlichen Traktors, wobei das Antriebssystem umfasst:
- einen Verbrennungsmotor (E), der mit einer Heckzapfwelle und einer Frontzapfwelle ausgestattet ist,
- ein Heckmodul (DL), einschließlich eines Heckgetriebes und Bremsen, die mit der Heckzapfwelle wirkverbunden sind, um Bewegung auf eine Hinterachse (RH) zu übertragen,
- ein Frontmodul (FM), einschließlich mindestens eines Differentials, das mit der Frontzapfwelle wirkverbunden ist, um Bewegung auf eine Vorderachse (FH) und vordere Bremsen zu übertragen,
wobei das Schmiersystem **dadurch gekennzeichnet ist, dass**
• das Heckmodul (DL) einen ersten Hydraulikölschmierkreis (CC) umfasst, umfassend
+ eine Hydraulikpumpe, die betriebsmäßig mit dem Getriebe gekoppelt ist, um eine Antriebskraft von diesem aufzunehmen,
+ einen Kühler (HE), der vor dem Motor (E) angeordnet ist,
• das Frontmodul (FM) einen zweiten Schmierkreis umfasst, umfassend
+ eine erste Leitung (P1), die dem Kühler nachgelagert mit dem ersten Schmierkreis (CC) verbunden ist,
+ eine elektrische Pumpe (P) und
+ eine zweite Leitung (P2), die zwischen der elektrischen Pumpe (P) und dem ersten Schmierkreis (CC) angeschlossen ist, um durch die erste Leitung (P1) angesaugtes Hydrauliköl zurückzuführen.

2. System nach Anspruch 1, ferner umfassend Verarbeitungsmittel (VCU), die konfiguriert sind, um ein Ventil und die elektrische Pumpe (P) zu steuern.

3. System nach Anspruch 2, wobei ein zweiter Kreis ferner ein elektrisches Ventil (V) einschließt und wobei das Verarbeitungsmittel ferner konfiguriert ist, um das Ventil (V) zu steuern.

4. System nach Anspruch 3, wobei das Verarbeitungsmittel konfiguriert ist, um mindestens eines der folgenden Verfahren durchzuführen:
- Steuern des Ventilöffnung (V) proportional zu einem Druckwert in einem Hydraulikkreis, der die hinteren und/oder vorderen Bremsen implementiert,
- Berechnen einer ersten durch das Ventil (V) angesaugten Ölmenge basierend auf
+ einer Ventilöffnungszeit und
+ einem Druckwert in einem ersten Hydraulikkreis und vorzugsweise auch
+ einem Temperaturwert des abgezapften Öls,
- Aktivieren der Hydraulikpumpe (P) zum Umwälzen des durch das Ventil angesaugten Öls;
- Berechnen einer zweiten Ölmenge, die von der Hydraulikpumpe (P) gepumpt wird, als Funktion eines Versorgungsstromwerts der Hydraulikpumpe während einer relativen Aktivierung und Stoppen der Hydraulikpumpe (P), wenn die zweite Menge gleich der ersten Menge ist.

5. System nach einem der vorstehenden Ansprüche, wobei das Frontmodul mindestens eine Kammer umfasst, in der rotierende Bauteile, wie ein Differential und/oder Bremsen, angeordnet sind, und wobei die elektrische Pumpe dem Frontmodul (FM) mittels eines Sackhohlraums zugeordnet ist, in den eine Leitung mündet, die eine Saugöffnung (SK) aufweist, die unter Betriebsbedingungen in einer Zwischenposition einer Höhe der Kammer angeordnet ist.

6. System nach Anspruch 5, wobei die Einlassöffnung (SK) über eine entsprechende Vorder- oder Rückwand in Bezug auf eine Vorwärtsfahrtrichtung des Antriebssystems (PS) in die Kammer mündet.

7. System nach Anspruch 6, ferner umfassend einen Neigungsmesser, der funktionell mit den Verarbeitungsmitteln verbunden ist, und wobei die Verarbeitungsmittel konfiguriert sind, um eine Aktivierung der Pumpe (P) zu verhindern oder zu begrenzen, wenn das Fahrzeug bergab bzw. bergauf fährt.

8. System nach Anspruch 6 oder 7, wobei die Ansaugöffnung (SK) auf etwa halber Höhe der Kammer angeordnet ist.

## Revendications

1. Système de lubrification d'un système de propulsion (PS) d'un tracteur agricole, le système de propulsion comprenant
- un moteur à combustion (E) équipé d'une prise de force arrière et d'une prise de force avant,
- un module arrière (DL) comportant une transmission arrière et des freins raccordés de manière fonctionnelle à la prise de force arrière pour transmettre un mouvement à un essieu arrière (RH),
- un module avant (FM) comportant au moins un différentiel relié de manière fonctionnelle à la prise de force avant pour transmettre un mouvement à un essieu avant (FH) et aux freins avant,
ledit système de lubrification est **caractérisé en ce que**
· le module arrière (DL) comprend un premier circuit de lubrification (CC) d'huile hydraulique comprenant
+ une pompe hydraulique accouplée de manière fonctionnelle à la transmission pour recevoir une force motrice de celle-ci,
+ un radiateur (HE), situé à l'avant du moteur (E),
· le module avant (FM) comprend un second circuit de lubrification comprenant
+ un premier conduit (P1) raccordé au premier circuit de lubrification (CC) en aval du radiateur,
+ une pompe électrique (P) et
+ un second conduit (P2) raccordé entre la pompe électrique (P) et le premier circuit de lubrification (CC) pour faire recirculer l'huile hydraulique aspirée à travers ledit premier conduit (P1).

2. Système selon la revendication 1, comprenant en outre des moyens de traitement (VCU) configurés pour commander une vanne et ladite pompe électrique (P).

3. Système selon la revendication 2, dans lequel un second circuit comporte en outre une vanne électrique (V), et dans lequel lesdits moyens de traitement sont en outre configurés pour commander ladite vanne (V).

4. Système selon la revendication 3, dans lequel lesdits moyens de traitement sont configurés pour réaliser au moins l'une des procédures suivantes :
- commande de l'ouverture de vanne (V) proportionnellement à une valeur de pression dans un circuit hydraulique mettant en œuvre les freins arrière et/ou avant,
- calcul d'une première quantité d'huile aspirée à travers la vanne (V) en fonction
+ d'un temps d'ouverture de vanne et
+ d'une valeur de pression dans un premier circuit hydraulique et, de préférence, également
+ une valeur de température de l'huile prélevée,
- activation de la pompe hydraulique (P) pour faire recirculer l'huile aspirée à travers la vanne ;
- calcul d'une seconde quantité d'huile pompée par la pompe hydraulique (P) en fonction d'une valeur de courant d'alimentation de la pompe hydraulique lors d'une activation et d'un arrêt relatifs de la pompe hydraulique (P) lorsque ladite seconde quantité est égale à ladite première quantité.

5. Système selon l'une quelconque des revendications précédentes, dans lequel le module avant comporte au moins un compartiment dans lequel des éléments rotatifs, tels qu'un différentiel et/ou des freins, sont agencés, et dans lequel la pompe électrique est associée au module avant (FM) au moyen d'une cavité borgne, dans lequel s'ouvre un conduit ayant une ouverture d'aspiration (SK) agencée dans une position intermédiaire d'une hauteur du compartiment, dans des conditions de fonctionnement.

6. Système selon la revendication 5, dans lequel ladite ouverture d'admission (SK) s'ouvre dans le compartiment par l'intermédiaire d'une paroi avant ou arrière correspondante par rapport à une direction de déplacement vers l'avant du système de propulsion (PS).

7. Système selon la revendication 6, comprenant en outre un inclinomètre interfacé de manière fonctionnelle avec lesdits moyens de traitement, et dans lequel lesdits moyens de traitement sont configurés pour inhiber ou limiter une activation de la pompe (P) lorsque le véhicule avance en descente ou en montée, respectivement.

8. Système selon la revendication 6 ou 7, dans lequel ladite ouverture d'aspiration (SK) est disposée approximativement à la moitié de la hauteur du compartiment.
